# EUROPEAN PATENT SPECIFICATION

(11) **EP 2 618 673 B1**
(45) Date of publication and mention of the grant of the patent: **18.02.2015**
(21) Application number: 11793520.5
(22) Date of filing: 23.09.2011
(51) Int. Cl.: A21D 13/00, A23G 3/00, A23G 3/34

(54) **DECOR AND COATING DOUGH**
DEKOR- UND BELEGTEIG
PÂTE POUR DÉCORER ET GARNIR

(30) Priority: 23.09.2010 TR 201007799
(43) Date of publication of application: 31.07.2013
(73) Proprietor: Özmer Pastacilik ve Icecek Ürünleri sanayi Pazarlama Turizm ve dis Ticaret Anonim Sirketi, 34775 Istanbul (TR)
(72) Inventor: BERBER, Ömer Faruk, 34775 Istanbul (TR)
(74) Representative: Iskender, Ibrahim
(86) International application number: PCT/TR2011/000214
(87) International publication number: WO 2012/039692

(56) References cited:
- WO-A1-2009/022997
- US-A- 5 017 394
- US-A- 5 976 586
- US-A1- 2009 214 715
- US-A1- 2009 291 185
- "Pâte à modeler (comestible pour enfants de plus d'un an)", INTERNET CITATION, 7 March 2005 (2005-03-07), pages 1-6, XP002495419, Retrieved from the Internet: URL:http://membres.lycos.fr/stjosephwaterl oo/fichiers/bricolages/pate_a_m odeler.htm [retrieved on 2008-09-09]

## Description

### Related Art

The invention relates to coating of the pastry products, in food sector, such as cakes and wet cakes and making a variety of decorative figures with decors.

The invention relates to particularly a decor and coating dough, used by being shaped directly in coating of the pastry products, in making decors and a variety of decorative figures, comprising thickener, sweetener, vegetable oil, water, flavouring agent, humectant, colouring agent, acidity regulator, aromatiser and preservative; and to the production method of this.

### Prior Art

The doughs used presently are known as decor and coating doughs and these products over cake of wet cake let go of themselves and melt over the sponge cake (fat - free cake of wet cake) depending on the humidity and temperatures prevalent under conditions of confectionery conditions. In addition, the figures made can not preserve their shapes for a long time and their shapes become distorted also depending on the factors of humidity and temperature. In the present applications, the materials such as crème chantily and cream coated under decor and coating dough make the dough melt, depending on the factors of humidity and temperature. Resistance of the dough can not prevent this melting. Furthermore, colours of the doughs in the present applications are matt and their structures are rough. Such properties melt away the attractiveness of products. Easy shaping property is also low.

The European patent application with no EP0827693 contained in the literature relates to embellishment product for making of cream - cake, biscuit and confectionery, manufacture process and the composite product is embellished form. This invention relates to a cream - cake, biscuit and confectionery making product that can be in form of a self - aerated mass and additionally can be used as an embellishment material in a composite product comprised of a product baked in oven. The invention at the same time relates to a process for preparation of this aerated product and embellished composite product. The aerated mass is stored for couple of months at a high temperature as high as 30°C without a change in the structure, texture or flavour.

In embellishment of confectionery products, decorative doughs are commonly used in addition to chocolate sauces. The decorating doughs are prepared using water, starch, superfine sugar, butter or margarine. In the patent application with no EP0965275 related to decorative doughs, marzipan or persipan sucstitute made from legumes, sweeteners and optionally starch is disclosed.

However, said decorative doughs can not preserve their shape given by the user during the processing phase or in a very short time later after being processed, melt and release their juice or can not take convenient form even at the processing phase of the product. Apart form this; said decorative doughs are not appropriate for making of decorative figures.

In Japan patent with no JP 63109739 A, decorative doughs formed in moulds and placed over the dough are disclosed. The doughs are subsequently cooked being baked together. To obtain decorative dough, sugar is blended with thickened malt syrup and water in proper ratios and confectionery is obtained. This confectionery is blended with nuts, dried fruits, and similar and final form is given and is used over other doughs as decorative forms.

The decorative dough used in the invention mentioned above is cooked together with the confectionery product on which it is placed. Therefore, it is not possible to use it with the products cooking of which is not desirable. In addition, it does not allow making a coating on the desired product without using a mould.

The patent application with no US2009291185 contained in the literature relates to an edible modeling material which is a kneadable and moldable baking mixture, including a proportion of sweetener of from 0% to about 50% by weight, a proportion of flour of from about 10% to about 50% by weight, a proportion of starch of from 0% to about 20% by weight, a proportion of water of from about 5% to about 30% by weight, a proportion of animal and/or vegetable protein of from 0% to about 5% by weight, and a proportion of animal and/or vegetable fat of from 0% to about 5% by weight.

In the invention described above, the raw materials are mixed randomly. Certain temperature or period is not determined. In the process steps of the invention, kneading and then, keeping the mixture in a cold environment, then shaping and finally, baking are included.

The literature with no XP002495419 contained an edible modeling material comprising fat, honey, milk, flour and carob flour (thickener).

An article including different recipes of dough that can be shaped is given above. One of the recipes included in the article belongs to "dough preserved softly". And, it contains a cup of flour, a half cup of table salt, a table spoon of oil, a cup of water, two teaspoons of cream of tartar and food coloring. The production process comprises mixing in a pot until it thickens adequately. Another recipe contains peanut butter, honey, milk, flour, carob and cocoa. The preparation of said product discloses the method, in which the raw materials are added successively without determining any temperature, period or order, and mixed. A similar recipe contains flour or bulgur, salt, cream of tartar, water, herbal oil and food coloring. The production method is based on firstly adding the dry materials successively, and then adding water and oil. As in the other recipes, no objects, benefits, temperature, period and order are determined. Said recipes are similar to meal recipes.

The patent application with no WO2009022997 contained in the literature relates to herbal, ready to use decorative cold pastry gel comprising at least one acidity regulatory agent and at least one thickening enhancer used in pastries, cakes, fruit salads, desserts in the food sector as decoration, dressing and taste enhancer, and method for production thereof.

The patent application with no US2009214715 contained in the literature relates to a decorative icing comprising (a) sugar in an amount of between 65% and 85% by weight; (b) water in an amount of between 8% and 16% by weight; (c) corn syrup in an amount of between 1.5% and 7% by weight; and (d) a gum blend in an amount of between 0.3% and 1% by weight, the gum blend comprising, in descending order of amount, gum arabic, propylene glycol alginate and xanthan gum; wherein the icing is ready to use, flowable, protein-free, and hardens after exposure to air.

The patent application with no US5017394 contained in the literature relates to base shapes for coating and decorating food products such as cakes and cookies. The base shape is prepared from a dough comprising water, thickener, sweetener, preservative (potassium sorbate), colouring agent, flavouring agent, vegetable oil, humuctant (glycerine).

The patent application with no US5976586 contained in the literature relates to a food glaze composition for coating food items including bakery products. The glaze composition includes one or more natural or modified vegetable gums and is eggless and protein-free. The composition imparts a shine, aids in browning, retards moisture loss from the glazed product, and can be applied to food products before and/or after baking and freezing. The glaze composition is also effective in controlling the development of mold, yeast and bacteria.

In conclusion, the need for a decor and coating dough eliminating the shortcomings existing in the prior art, maintaining its form without distortion for a long time, structure of which will remain unspoiled without being affected by humidity and temperature by means of using particularly modified maize starch as thickener and the inadequacy of the existing solutions have made it mandatory to make an improvement in the respective related art.

### Purpose of the Invention

Purpose of the invention is to achieve obtaining decor and coating product in dough form, used in pastry in food sector, not affected by humidity and temperature.

Another purpose of the invention is to achieve production of decor and coating dough, maintaining its form for a long time that can be used is making of a variety of animals, flowers, humans, and similar for embellishment of pastry products.

Another purpose of the invention is to achieve production of decor and coating dough, not making drying and cracks over pastry products, homogeneous in terms of colour, smell, consistency and similar properties, being industrial and standard.

A further purpose of the invention is to achieve production of decor and coating dough offering convenience of preparation and use, saving on time, material and labour.

A purpose of the invention on the other hand is to achieve production of decor and coating dough produced under appropriate conditions in terms of hygiene and sanitation and offered to consumers.

The invention is decor and coating dough production method developed to meet the mentioned objectives, comprising the operation steps of;
- adding sweetener into refined city water in the mixer and solubilising it by stirring it for 6 minutes at 50°C,
- adding preservative, stirring it for 2 minutes at 50°C,
- adding acidity regulator, stirring it for 2 minutes at 50°C,
- adding thickener, stirring it for 10 minutes at 50°C,
- adding colouring agent, stirring it for 10 minutes at 50°C,
- hurling sweetener into it, stirring it for 15 minutes at 70°C until the temperature reaches 95 °C,
- taking the mixture obtained into the dough kneading mixer,
- adding thickener, stirring it for 7 ± 2 minutes at 90°C,
- adding vegetable oil, stirring it for 2 ± 2 minutes at 85°C,
- adding flavouring agent, stirring it for 3 ± 2 minutes at 80°C,
- adding thickener, stirring it for 3 ± 2 minutes at 80°C,
- adding humectant, stirring it for 2 ± 2 minutes at 80°C,
- adding aromatiser, stirring it for 2 ± 2 minutes at 75°C,
- adding sweetener, stirring it for 3 ± 2 minutes at 70°C,
- adding acidity regulator, stirring it for 3 ± 2 minutes at 70°C.

To meet said objectives, the invention comprises thickener at the rate of 38,65-43,95% by weight, sweetener agent at the rate of 29,04-38,06% by weight, vegetable oil at the rate of 9-13% by weight, water at the rate of 7,5-12,5% by weight, flavouring agent at the rate of 2,5-3,5% by weight, humectant at the rate of 0,65-0,75% by weight, colouring agent at the rate of 0,6-0,7% by weight, acidity regulator at the rate of 0,175-0,325% by weight, aromatiser at the rate of 0,1-0,2% by weight and preservative at the rate of 0,075-0,125% by weight.

In decor and coating dough production method developed to meet the objectives mentioned; as sweetener agent, individuals or combinations selected from the group comprising maltose, granulated sugar, aspartame, acesulfame K, fructose syrups, saccharine, sorbitol, mannitol, maltitol, lactitol and isomalt are added.

In decor and coating dough production method developed to meet the objectives mentioned; as preservative, potassium sorbate is added.

In decor and coating dough production method developed to meet the objectives mentioned; as acidity regulator, individuals or combinations selected from the group comprising citric acid (E 330), lactic acid (E 270), tartaric acid (E 334), malic acid (E 296), ascorbic acid (E 300), trisodium and its salts are added.

In decor and coating dough production method developed to meet the objectives mentioned; as thickener, individuals or combinations selected from the group comprising modified maize starch (Acetylated Distarch Adipat (E 1422)), carboxy methyl cellulose (CMC), tragacanth gum, pregelatinised maize starch, guar gum (E 412), xanthan gum (E 415), gellan gum (E 418), pectin (E 440), sodium alginate (E 401), carrageenan (E 407), agar agar (E 406), locust bean gum (E 410), Calcium Alginate (E 404), modified potato starch, modified maize starch, modified tapioca starch, natural wheat starch, modified rice starch are added.

In decor and coating dough production method developed to meet the objectives mentioned; as colouring agent, individuals or combinations selected from the group comprising riboflavin, chlorophyll, caramel, herbal carbon, carotenes, paprika extract, betanin, anthocyanin, calcium carbonate, titanium dioxide, ferric oxide and hydroxide, curcumine, tartrazine, quinoline yellow, sunset yellow, carmine, carmoisine, ponso 4R, Allura Red AC, Patent Blue, Indigotine, Brilliant Blue, Green S, Black PN, Brown HT, lycopene and lutein are added.

In decor and coating dough production method developed to meet the objectives mentioned; as vegetable oil, palm oil, coconut oil, cocoa oil and/or sunflower oil are added.

In decor and coating dough production method developed to meet the objectives mentioned; as flavouring agent, milk powder and/or whey powder are added.

In decor and coating dough production method developed to meet the objectives mentioned; as humectant, glycerine is added.

In decor and coating dough production method developed to meet the objectives mentioned; as aromatiser, individuals or combinations selected from the group comprising vanillin powder, chocolate aromas (white, bitter), almond, rice pudding, milk and almond pudding (ke 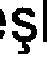 kül-a traditional Turkish sweet), cream, milk, liquid vanilla and heavy - cream aroma are added.

The decor and coating dough production method developed to meet the objectives mentioned comprises the operation steps of adding modified maize starch at the rate of 37,5-42,5% by weight, pregelatinised maize starch at the rate of 0,65-0,75% by weight, CMC at the rate of 0,25-0,35% by weight, tragacanth gum at the rate of 0,25-0,35% by weight, granulated sugar at the rate of 16,5-20,5% by weight, maltose syrup at the rate of 12,5-17,5% by weight, aspartame at the rate of 0,02-0,03% by weight, acesulfame K at the rate of 0,02-0,03% by weight, palm oil at the rate of 9-13% by weight, water at the rate of 7,5-12,5% by weight, milk powder at the rate of 2,5-3,5% by weight, glycerine at the rate of 0,65-0,75% by weight, titanium dioxide at the rate of 0,6-0,7% by weight, lactic acid at the rate of 0,1-0,2% by weight, citric acid at the rate of 0,075-0,125% by weight, vanillin powder at the rate of 0,1-0,2% by weight and potassium sorbate at the rate of 0,075-0,125% by weight.

In the alternative decor and coating dough production method developed to meet the objectives mentioned; invert sugar is used instead of the mixture of granulated sugar, water and citric acid.

The decor and coating dough production method developed to meet the objectives mentioned, it comprises the operation steps of adding modified maize starch at the rate of 37,5-42,5% by weight, pregelatinised maize starch at the rate of 0,65-0,75% by weight, CMC at the rate of 0,25-0,35% by weight, tragacanth gum at the rate of 0,25-0,35% by weight, invert sugar at the rate of 24,075-33,125% by weight, maltose syrup at the rate of 12,5-17,5% by weight, aspartame at the rate of 0,02-0,03% by weight, acesulfame K at the rate of 0,02-0,03% by weight, palm oil at the rate of 9-13% by weight, milk powder at the rate of 2,5-3,5% by weight, glycerine at the rate of 0,65-0,75% by weight, titanium dioxide at the rate of 0,6-0,7% by weight, lactic acid at the rate of 0,1-0,2% by weight, vanillin powder at the rate of 0,1-0,2% by weight and potassium sorbate at the rate of 0,075-0,125% by weight.

In the decor and coating dough production method developed to meet the objectives mentioned; as mixer, double - walled caldron with mixer is used.

The decor and coating dough production method developed to meet the objectives mentioned comprises tragacanth gum, modified maize starch, carboxy methyl cellulose (CMC) and pregelatinised maize starch as thickener; maltose, granulated sugar, aspartame and acesulfame K as sweetener; palm oil as vegetable oil; refined city water as water; milk powder as flavouring agent; glycerine as humectant, titanium dioxide as colouring agent; lactic acid, citric acid as acidity regulator, vanillin powder as aromatiser; and potassium sorbate as preservative.

### Detailed Description of the Invention

The present invention relates to decor and coating dough used in food sector in coating of a variety of pastry products, in making of a variety of animal, flower, human and similar decorative figures and used as auxiliary raw material in confectionery; and to the production method of this.

The decor and coating dough produced in connection with the invention comprises thickener, sweetener, vegetable oil, water, flavouring agent, humectant, colouring agent, acidity regulator, aromatiser and preservative.

In the said decor and coating dough; as thickener, modified maize starch (Acetylated Distarch Adipate (E 1422)), carboxy methyl cellulose (CMC), tragacanth gum and pregelatinised maize starch have been used; instead of them, raw materials such as hydroxy propyl distarch phosphate (hydroxy propyl distarch phosphate (E-1442)), guar gum (E 412), xanthan gum (E 415), gellan gum (E 418), pectin (E 440), sodium alginate (E 401), carrageenan (E 407), modified potato starch, modified maize starch, modified tapioca starch, natural wheat starch, modified rice starch and the mixture of them are used.

In the decor and coating dough produced in connection with the invention; as sweetener, granulated sugar, maltose syrup, aspartame and acesulfame K have been used, instead of them, fructose syrups, saccharine, sorbitol, mannitol, maltitol, lactitol and isomalt are also used.

In the decor and coating dough according to the invention, as vegetable oil, palm oil is used; in addition, sunflower oil and palm oil is used individually or together. As flavouring agent, milk powder is used. As alternative to this product, whey powder alone or with milk powder can be used. As humectant on the other hand, glycerine is used.

In the decor and coating dough produced in connection with the invention; as colouring agent, titanium dioxide is used. Alternatively, doughs with same properties in different colours can be obtained by means of using other synthetic and natural dyes in the Turkish food codex. These can be individuals or combinations selected from the group comprising riboflavin, chlorophyll, caramel, herbal carbon, carotenes, paprika extract, betanin, anthocyanin, calcium carbonate, titanium dioxide, ferric oxide and hydroxide, curcumine, tartrazine, quinoline yellow, sunset yellow, carmine, carmoisine, ponso 4R, Allura Red AC, Patent Blue, Indigotine, Brilliant Blue, Green S, Black PN, Brown HT, lycopene and lutein.

In the decor and coating dough according to the invention, as acidity regulator, citric acid and lactic acid have been used, and alternative to them, tartaric acid (E 334), malic acid (E 296), ascorbic acid (E 300), trisodium citrate and its salt (E 333) are used.

In the formulation of the invention, as aromatiser, vanillin powder is used. Alternatively, chocolate aromas (white, bitter), heavy - cream aroma, almond, rice pudding, milk and almond pudding (ke 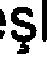 kül-a traditional Turkish sweet), cream, milk, liquid vanilla and similar are used. As preservative, on the other hand, potassium sorbate is used.

The non-limitative formulation concerning the contents, by weight, of the decor and coating dough presented according to the invention is given below.

**Table-1: The contents of the decor and the coating dough**

| **The contents** | **Amount preferred by weight (%)** | **Amount Usable By Weight (%)** |
|---|---|---|
| Thickener | 41,3 | 38,65-43,95 |
| Sweetening agent | 32,85 | 29,04-38,06 |
| Vegetable oil | 11 | 9-13 |
| Water | 10 | 7,5-12,5 |
| Flavouring agent | 3 | 2,5-3,5 |
| Humectant | 0,7 | 0,65-0,75 |
| Colouring agent | 0,65 | 0,6-0,7 |
| Acidity regulator | 0,25 | 0,175-0,325 |
| Aromatiser | 0,15 | 0,1-0,2 |
| Preservative | 0,1 | 0,075-0,125 |
| Total | 100 | 88,29-113,11 |

**Table-2: Sample contents of the decor and the coating dough**

| **The contents** | **Amount preferred by weight (%)** | **Amount Usable By Weight (%)** |
|---|---|---|
| Modified maize starch | 40 | 37,5-42,5 |
| Pregelatinised Maize starch | 0,7 | 0,65-0,75 |
| CMC (carboxy methyl cellulose) | 0,3 | 0,25-0,35 |
| Tragacanth gum | 0,3 | 0,25-0,35 |
| Granulated sugar | 18 | 16,5-20,5 |
| Maltose syrup | 14,8 | 12,5-17,5 |
| Aspartame | 0,025 | 0,02-0,03 |
| Acesulfame K | 0,025 | 0,02-0,03 |
| Palm oil | 11 | 9-13 |
| Water | 10 | 7,5-12,5 |
| Milk powder | 3 | 2,5-3,5 |
| Glycerine | 0,7 | 0,65-0,75 |
| Titanium dioxide | 0,65 | 0,6-0,7 |
| Lactic acid | 0,15 | 0,1-0,2 |
| Citric acid | 0,1 | 0,075-0,125 |
| Vanillin powder | 0,15 | 0,1-0,2 |
| Potassium sorbate | 0,1 | 0,075-0,125 |
| Total | 100 | 88,29-113,11 |

In a preferred application of the invention, invert sugar is used instead of the mixture of granulated sugar, water and citric acid. The table illustrating that formulation is given below.

**Table-3: Sample contents of the decor and the coating dough**

| **The contents** | **Amount preferred by weight (%)** | **Amount Usable By Weight (%)** |
|---|---|---|
| Modified maize starch | 40 | 37,5-42,5 |
| Pregelatinised Maize starch | 0,7 | 0,65-0,75 |
| CMC (carboxy methyl cellulose) | 0,3 | 0,25-0,35 |
| Tragacanth gum | 0,3 | 0,25-0,35 |
| **(Granulated sugar + Water + Citric acid) = Invert sugar** | 28,1 | 24,075-33,125 |
| Maltose syrup | 14,8 | 12,5-17,5 |
| Aspartame | 0,025 | 0,02-0,03 |
| Acesulfame K | 0,025 | 0,02-0,03 |
| Palm oil | 11 | 9-13 |
| Milk powder | 3 | 2,5-3,5 |
| Glycerine | 0,7 | 0,65-0,75 |
| Titanium dioxide | 0,65 | 0,6-0,7 |
| Lactic acid | 0,15 | 0,1-0,2 |
| Vanillin powder | 0,15 | 0,1-0,2 |
| Potassium sorbate | 0,1 | 0,075-0,125 |
| Total | 100 | 88,29-113,11 |

During production of the said decor and coating dough, first sweetener (granulated sugar) is added into the city water at 50°C in double - walled stainless steel caldron with mixer and is solubilised for 6 minutes at 50°C. Then, respectively, preservative (Potassium sorbate) is added and stirred for 3 minutes at 50°C; acidity regulator (Citric acid) is added and stirred for 2 minutes at 50°C; thickener (Carboxy Methyl Cellulose and tragacanth gum) is added and stirred for 10 minutes at 50°C; colouring agent (Titanium dioxide) is added and stirred for 10 minutes at 50°C; and sweetener (maltose syrup) is hurled into it and stirred for 15 minutes at 70'°C until the temperature reaches 95°C.

The mixture obtained is taken to a separate dough kneading mixer and a homogeneous mixture is obtained by adding over it, respectively, thickener (Modified maize starch, which is Acetylated Distarch Adipate (E 1422)), stirring it at 90°C for 7 ± 2 minutes; palm oil, stirring it at 85°C for 2 ± 2 minutes; flavouring agent (milk powder), stirring it at 80°C for 3 ± 2 minutes; thickener (Pregelatinised maize starch), stirring it at 80°C for 3 ± 2 minutes; humectant (glycerine), stirring it at 80°C for 2 ± 2 minutes; vanillin powder, stirring it at 75°C for 2 ± 2 minutes; sweetener (Aspartame, Acesulfame K), stirring it at 70°C, for 3 ± 2 minutes; acidity regulator (Lactic acid), stirring it at 70°C for 3 ± 2 minutes.

After reaching the end user, the product is taken out from the box for use and is shaped up with the help of rolling pin or manually and is made available for use without applying any heat process. The product is used in pastry products for purpose of coating and decoration by means of giving it a variety of shapes with the help of moulds or by efforts of hands.

Because the decor and coating dough according to the invention has the properties of easy shaping, maintaining the shape being applied and non - leaking, it can also be used in the making of a variety of decorative figures in addition to its capability of being used in embellishment of pastry products. The decor and coating dough are used by manual operation or by being placed in to moulds.

## Claims

1. Decor and coating dough production method used in coating and embellishment of pastry products, it comprises the operation steps of;
- adding sweetener into refined city water in the mixer and solubilising it by stirring it for 6 minutes at 50°C,
- adding potassium sorbate as preservative, stirring it for 2 minutes at 50°C,
- adding acidity regulator, stirring it for 2 minutes at 50°C,
- adding thickener, stirring it for 10 minutes at 50°C,
- adding colouring agent, stirring it for 10 minutes at 50°C,
- hurling sweetener into it, stirring it for 15 minutes at 70°C until the temperature reaches 95°C,
- taking the dough obtained into the dough kneading mixer,
- adding thickener, stirring it for 7 ± 2 minutes at 90°C,
- adding vegetable oil, stirring it for 2 ± 2 minutes at 85°C,
- adding flavouring agent, stirring it for 3 ± 2 minutes at 80°C,
- adding thickener, stirring it for 3 ± 2 minutes at 80°C,
- adding glycerine as humectant, stirring it for 2 ± 2 minutes at 80°C,
- adding aromatiser, stirring it for 2 ± 2 minutes at 75°C,
- adding sweetener, stirring it for 3 ± 2 minutes at 70°C,
- adding acidity regulator, stirring it for 3 ± 2 minutes at 70°C.

2. Decor and coating dough production method according to Claim 1, and is **characterised in that**; it comprises the operation steps of adding thickener at the rate of 38,65-43,95% by weight, sweetener agent at the rate of 29,04-38,06% by weight, vegetable oil at the rate of 9-13% by weight, water at the rate of 7,5-12,5% by weight, flavouring agent at the rate of 2,5-3,5% by weight, humectant at the rate of 0,65-0,75 % by weight, colouring agent at the rate of 0,6-0,7% by weight, acidity regulator at the rate of 0,175-0,325% by weight, aromatiser at the rate of 0,1-0,2% by weight and preservative at the rate of 0,075-0,125% by weight.

3. Decor and coating dough production method according to Claim 1, and is **characterised in that**; as sweetener, individuals or combinations selected from the group comprising maltose, granulated sugar, aspartame, acesulfame K, fructose syrups, saccharine, sorbitol, mannitol, maltitol, lactitol and isomalt are added.

4. Decor and coating dough production method according to Claim 1, and is **characterised in that**; as acidity regulator, individuals or combinations selected from the group comprising citric acid (E 330), lactic acid (E 270), tartaric acid (E 334), malic acid (E 296), ascorbic acid (E 300), trisodium and its salts are added.

5. Decor and coating dough production method according to Claim 1, and is **characterised in that**; as thickener individuals or combinations selected from the group comprising modified maize starch (Acetylated Distarch Adipate (E 1422)), carboxy methyl cellulose (CMC), tragacanth gum, pregelatinised maize starch, guar gum (E 412), xanthan gum (E 415), gellan gum (E 418), pectin (E 440), sodium alginate (E 401), carrageenan (E 407), agar agar (E 406), locust bean gum (E 410), Calcium Alginate (E 404), modified potato starch, modified maize starch, modified tapioca starch, natural wheat starch, modified rice starch are added.

6. Decor and coating dough production method according to Claim 1, and is **characterised in that**; as colouring agent, individuals or combinations selected from the group comprising riboflavin, chlorophyll, caramel, herbal carbon, carotenes, paprika extract, betanin, anthocyanin, calcium carbonate, titanium dioxide, ferric oxide and hydroxide, curcumine, tartrazine, quinoline yellow, sunset yellow, carmine, carmoisine, ponso 4R, Allura Red AC, Patent Blue, Indigotine, Brilliant Blue, Green S, Black PN, Brown HT, lycopene and lutein are added.

7. Decor and coating dough production method according to Claim 1, and is **characterised in that**; as vegetable oil, palm oil, coconut oil, cocoa oil and/or sunflower oil are added.

8. Decor and coating dough production method according to Claim 1, and is **characterised in that**; as flavour building agent, milk powder and/or whey powder are added.

9. Decor and coating dough production method according to Claim 1, and is **characterised in that**; as aromatiser, individuals or combinations selected from the group comprising vanillin powder, chocolate aromas (white, bitter), almond, rice pudding, milk and almond pudding, cream, milk, liquid vanilla and heavy - cream aromas are added.

10. Decor and coating dough production method according to the claims above, and is **characterised in that**; it comprises the operation steps of adding modified maize starch at the rate of 37,5-42,5% by weight, pregelatinised maize starch at the rate of 0,65-0,75% by weight, CMC at the rate of 0,25-0,35% by weight, tragacanth gum at the rate of 0,25-0,35% by weight, granulated sugar at the rate of 16,5-20,5% by weight, maltose syrup at the rate of 12,5-17,5% by weight, aspartame at the rate of 0,02-0,03% by weight, acesulfame K at the rate of 0,02-0,03% by weight, palm oil at the rate of 9-13% by weight, water at the rate of 7,5-12,5% by weight, milk powder at the rate of 2,5-3,5% by weight, glycerine at the rate of 0,65-0,75% by weight, titanium dioxide at the rate of 0,6-0,7% by weight, lactic acid at the rate of 0,1-0,2% by weight, citric acid at the rate of 0,075-0,125% by weight, vanillin powder at the rate of 0,1-0,2% by weight and potassium sorbate at the rate of 0,075-0,125% by weight.

11. Decor and coating dough production method according to Claim 1, and is **characterised in that**; said mixer is double - walled caldron with mixer.

12. A decor and coating dough, used by being shaped directly in coating of the pastry products, in making decors and a variety of decorative figures, comprising
- tragacanth gum, modified maize starch, carboxy methyl cellulose (CMC) and pregelatinised maize starch as thickener,
- maltose, granulated sugar, aspartame and acesulfame K as sweetener,
- palm oil as vegetable oil,
- refined city water as water,
- milk powder as flavouring agent,
- glycerine as humectant,
- titanium dioxide as colouring agent,
- lactic acid, citric acid as acidity regulator,
- vanillin powder as aromatiser,
- potassium sorbate as preservative.

13. Decor and coating dough according to Claim 12, and is **characterised in that**; it comprises modified maize starch at the rate of 37,5-42,5% by weight, pregelatinised maize starch at the rate of 0,65-0,75% by weight, CMC at the rate of 0,25-0,35% by weight, tragacanth gum at the rate of 0,25-0,35% by weight, granulated sugar at the rate of 16,5-20,5% by weight, maltose syrup at the rate of 12,5-17,5% by weight, aspartame at the rate of 0,02-0,03% by weight, acesulfame K at the rate of 0,02-0,03% by weight, palm oil at the rate of 9-13% by weight, water at the rate of 7,5-12,5% by weight, milk powder at the rate of 2,5-3,5% by weight, glycerine at the rate of 0,65-0,75% by weight, titanium dioxide at the rate of 0,6-0,7% by weight, lactic acid at the rate of 0,1-0,2% by weight, citric acid at the rate of 0,075-0,125% by weight, vanillin powder at the rate of 0,1-0,2% by weight and potassium sorbate at the rate of 0,075-0,125% by weight.

## Patentansprüche

1. Dekorativ- und Beschichtungsteig-Herstellungsverfahren, das beim Beschichten und Verzieren von Gebäckprodukten angewendet wird, wobei es die Arbeitsschritte umfasst des:
- Hinzugebens von Süßungsmittel zu verfeinertem Stadtwasser in der Mischvorrichtung und Löslichmachens desselben durch 6 Minuten langes Rühren bei 50 °C,
- Hinzugebens von Kaliumsorbat als Konservierungsmittel, Rührens desselben 2 Minuten lang bei 50 °C,
- Hinzugebens von Säureregulator, Rührens desselben 2 Minuten lang bei 50 °C,
- Hinzugebens von Verdickungsmittel, Rührens desselben 10 Minuten lang bei 50 °C,
- Hinzugebens von Farbmittel, Rührens desselben 10 Minuten lang bei 50 °C,
- Hineinwerfens von Süßungsmittel, Rührens desselben 15 Minuten lang bei 70 °C, bis die Temperatur 95 °C erreicht,
- Bringens des erhaltenen Teigs in die Teigknetmischvorrichtung,
- Hinzugebens von Verdickungsmittel, Rührens desselben 7 ± 2 Minuten lang bei 90 °C,
- Hinzugebens von Pflanzenöl, Rührens desselben 2 ± 2 Minuten lang bei 85 °C,
- Hinzugebens von Aromastoff, Rührens desselben 3 ± 2 Minuten lang bei 80 °C,
- Hinzugebens von Verdickungsmittel, Rührens desselben 3 ± 2 Minuten lang bei 80 °C,
- Hinzugebens von Glycerin als Feuchthaltemittel, Rührens desselben 2 ± 2 Minuten lang bei 80 °C,
- Hinzugebens von Aromatisator, Rührens desselben 2 ± 2 Minuten lang bei 75 °C,
- Hinzugebens von Süßungsmittel, Rührens desselben 3 ± 2 Minuten lang bei 70 °C,
- Hinzugebens von Säureregulator, Rührens desselben 3 ± 2 Minuten lang bei 70 °C.

2. Dekorativ- und Beschichtungsteig-Herstellungsverfahren nach Anspruch 1, das **dadurch gekennzeichnet ist, dass** es due Arbeitsschritte umfasst des Hinzugebens eines Verdickungsmittels mit einer Rate von 38,65 - 43,95 Gew.-%, Süßungsmittels mit einer Rate von 29,04-38,06 Gew.-%, Pflanzenöls mit einer Rate von 9 - 13 Gew.-%, Wassers mit einer Rate von 7,5 - 12,5 Gew.-%, Aromastoffs mit einer Rate von 2,5 - 3,5 Gew.-%, Feuchthaltemittels mit einer Rate von 0,65 - 0,75 Gew.-%, Farbmittels mit einer Rate von 0,6 - 0,7 Gew.-%, Säureregulators mit einer Rate von 0,175 - 0,325 Gew.-%, Aromatisators mit einer Rate von 0,1 - 0,2 Gew.-% und Konservierungsmittels mit einer Rate von 0,075 - 0,125 Gew.-% umfasst.

3. Dekorativ- und Beschichtungsteig-Herstellungsverfahren nach Anspruch 1, das **dadurch gekennzeichnet ist, dass** als Süßungsmittel Einzelne oder Kombinationen ausgewählt aus der Gruppe umfassend Maltose, Kristallzucker, Aspartam, Acesulfam K, Fruktosesirup, Saccharin, Sorbit, Mannit, Maltitol, Lactitol und Isomalt hinzugegeben werden.

4. Dekorativ- und Beschichtungsteig-Herstellungsverfahren nach Anspruch 1, das **dadurch gekennzeichnet ist, dass** als Säureregulator Einzelne oder Kombinationen ausgewählt aus der Gruppe umfassend Zitronensäure (E 330), Milchsäure (E 270), Weinsäure (E 334), Apfelsäure (E 296), Ascorbinsäure (E 300), Trinatrium und dessen Salze hinzugegeben werden.

5. Dekorativ- und Beschichtungsteig-Herstellungsverfahren nach Anspruch 1, das **dadurch gekennzeichnet ist, dass** als Verdickungsmittel Einzelne oder Kombinationen ausgewählt aus der Gruppe umfassend modifizierte Maisstärke (acetyliertes Distärkeadipat (E 1422)), Carboxymethylcellulose (CMC), Traganthgummi) vorgelatinisierte Maisstärke, Guargummi (E 412), Xanthangummi (E 415), Gellangummi (E 418), Pektin (E 440), Natriumalginat (E 401), Carrageen (E 407), Agar-Agar (E 406), Johannisbrotkernmehl (E 410), Calciumalginat (E 404), modifizierte Kartoffelstärke, modifizierte Maisstärke, modifizierte Cassavastärke, natürliche Weizenstärke, modifizierte Reisstärke hinzugegeben werden.

6. Dekorativ- und Beschichtungsteig-Herstellungsverfahren nach Anspruch 1, das **dadurch gekennzeichnet ist, dass** als Farbmittel Einzelne oder Kombinationen ausgewählt aus der Gruppe umfassend Riboflavin, Chlorophyll, Karamell, pflanzlichen Kohlenstoff, Carotenen, Paprikaextrakt, Betanin, Anthocyanin, Calciumcarbonat, Titandioxid, Eisenoxid und -hydroxid, Kurkumin, Tartrazin, Chinolingelb, Sunsetgelb, Karmin, Karmoisin, Ponso 4R, Allurarot PC, Patentblau, Indigotin, Brilliantblau, Grün S, Schwarz PN, Braun HAT, Lycopen und Lutein hinzugegeben werden.

7. Dekorativ- und Beschichtungsteig-Herstellungsverfahren nach Anspruch 1, das **dadurch gekennzeichnet ist, dass** als Pflanzenöl Palmöl, Kokosnussöl, Kakaoöl und/oder Sonnenblumenöl hinzugegeben werden.

8. Dekorativ- und Beschichtungsteig-Herstellungsverfahren nach Anspruch 1, das **dadurch gekennzeichnet ist, dass** als Aromabaustoff Milchpulver und/oder Molkepulver hinzugegeben werden.

9. Dekorativ- und Beschichtungsteig-Herstellungsverfahren nach Anspruch 1, das **dadurch gekennzeichnet ist, dass** als Aromatisator Einzelne oder Kombinationen ausgewählt aus der Gruppe umfassend Vanillinpulver, Schokoladearomen (weiß, bitter), Mandel, Reisbrei, Milch- und Mandelbrei, Sahne, Milch, Flüssigvanille und Creme double-Aromen hinzugegeben werden.

10. Dekorativ- und Beschichtungsteig-Herstellungsverfahren nach den obigen Ansprüchen, das **dadurch gekennzeichnet ist, dass** es die Arbeitsschritte umfasst des Hinzugebens von modifizierter Maisstärke mit einer Rate von 37,5 - 42,5 Gew.-%, vorgelatinierter Maisstärke mit einer Rate von 0,65 - 0,75 Gew.-%, CMC mit einer Rate von 0,25 - 0,35 Gew.-%, Traganthgummi mit einer Rate von 0,25 - 0,35 Gew.-%, Kristallzucker mit einer Rate von 16,5 - 20,5 Gew.-%, Maltosesirup mit einer Rate von 12,5 - 17,5 Gew.-%, Aspartam mit einer Rate von 0,02 - 0,03 Gew.-%, Acesulfam K mit einer Rate von 0,02 - 0,03 Gew.-%, Palmöl mit einer Rate von 9 - 13 Gew.-%, Wasser mit einer Rate von 7,5 - 12,5 Gew.-%, Milchpulver mit einer Rate von 2,5-3,5 Gew.-%, Glycerin mit einer Rate von 0,65 - 0,75 Gew.-%, Titandioxid mit einer Rate von 0,6 - 0,7 Gew.-%, Milchsäure mit einer Rate von 0,1 - 0,2 Gew.-%, Zitronensäure mit einer Rate von 0,075 - 0,125 Gew.-%, Vanillinpulver mit einer Rate von 0,1 - 0,2 Gew.-% und Kaliumsorbat mit einer Rate von 0,075 - 0,125 Gew.-%.

11. Dekorativ- und Beschichtungsteig-Herstellungsverfahren nach Anspruch 1, das **dadurch gekennzeichnet ist, dass** die Mischvorrichtung ein doppelwandiger Kessel mit Mischvorrichtung ist.

12. Dekorativ- und Beschichtungsteig, der durch Gestalten direkt beim Beschichten der Teigprodukte, beim Herstellen von Dekorationen und einer Reihe von dekorativen Figuren verwendet wird, umfassend
- Traganthgummi, modifizierte Maisstärke, Carboxymethylcellulose (CMC) und vorgelatinierte Maisstärke als Verdickungsmittel,
- Maltose, Kristallzucker, Aspartam und Acesulfam K als Süßungsmittel,
- Palmöl als Pflanzenöl,
- verfeinertes Stadtwasser als Wasser,
- Milchpulver als Aromastoff,
- Glycerin als Feuchthaltemittel,
- Titandioxid als Farbmittel,
- Milchsäure, Zitronensäure als Säureregulator,
- Vanillinpulver als Aromatisator,
- Kaliumsorbat als Konservierungsmittel.

13. Dekorativ- und Beschichtungsteig nach Anspruch 12, das **dadurch gekennzeichnet ist, dass** es Folgendes umfasst: modifizierte Maisstärke mit einer Rate von 37,5 - 42,5 Gew.-%, vorgelatinisierte Maisstärke mit einer Rate von 0,65 -0,65 Gew.-%, CMC mit einer Rate von 0,25-0,35 Gew.-%, Traganthgummi mit einer Rate von 0,25-0,35 Gew.-%, Kristallzucker mit einer Rate von 16,5-20,5 Gew.-%, Maltosesirup mit einer Rate von 12,5-17,5 Gew.-%, Aspartam mit einer Rate von 0,02 - 0,03 Gew.-%, Acesulfam K mit einer Rate von 0,02 - 0,03 Gew.-%, Palmöl mit einer Rate von 9 - 13 Gew.-%, Wasser mit einer Rate von 7,5 - 12,5 Gew.-%, Milchpulver mit einer Rate von 2,5 - 3,5 Gew.-%, Glycerin mit einer Rate von 0,65 - 0,75 Gew.-%, Titandioxid mit einer Rate von 0,6 - 0,7 Gew.-%, Milchsäure mit einer Rate von 0,1 - 0,2 Gew.-%, Zitronensäure mit einer Rate von 0,075 - 0,125 Gew.-%, Vanillinpulver mit einer Rate von 0,1 - 0,2 Gew.-% und Kaliumsorbat mit einer Rate von 0,075 - 0,125 Gew.-%.

## Revendications

1. Procédé de production d'une pâte de décoration et de nappage utilisé pour le nappage et l'embellissement de produits de pâtisserie, comprenant les étapes de préparation consistant à :
- ajouter un édulcorant dans l'eau de la ville raffinée dans le mixeur et le solubiliser par le biais d'une agitation pendant 6 minutes à 50 °C,
- ajouter du sorbate de potassium en tant que conservateur, en le remuant pendant 2 minutes à 50 °C,
- ajouter un régulateur d'acidité, en le remuant pendant 2 minutes à 50 °C,
- ajouter un épaississant, en le remuant pendant 10 minutes à 50 °C,
- ajouter un agent colorant, en le remuant pendant 10 minutes à 50 °C,
- y jeter un agent édulcorant, en le remuant pendant 15 minutes à 70 °C jusqu'à ce que la température atteigne 95 °C,
- mettre la pâte obtenue dans le robot de malaxage de pâte,
- ajouter un épaississant, en le remuant pendant 7 ± 2 minutes à 90 °C,
- ajouter une huile végétale, en la remuant pendant 2 ± 2 minutes à 85 °C,
- ajouter un agent aromatisant, en le remuant pendant 3 ± 2 minutes à 80 °C,
- ajouter un épaississant, en le remuant pendant 3 ± 2 minutes à 80 °C,
- ajouter de la glycérine en tant qu'humectant, en la remuant pendant 2 ± 2 minutes à 80 °C,
- ajouter un arôme, en le remuant pendant 2 + 2 minutes à 75 °C,
- ajouter un agent édulcorant, en le remuant pendant 3 ± 2 minutes à 70 °C,
- ajouter un régulateur d'acidité, en le remuant pendant 3 ± 2 minutes à 70 °C.

2. Procédé de production d'une pâte de décoration et de nappage selon la revendication 1, et qui est **caractérisé en ce que** : il comprend les étapes de préparation consistant à ajouter un épaississant à hauteur de 38,65 à 43,95 % en poids, un agent édulcorant à hauteur de 29,04 à 38,06 % en poids, une huile végétale à hauteur de 9 à 13 % en poids, de l'eau à hauteur de 7,5 à 12,5 % en poids, un agent aromatisant à hauteur de 2,5 à 3,5 % en poids, un humectant à hauteur de 0,65 à 0,75 % en poids, un agent colorant à hauteur de 0,6 à 0,7 % en poids, un régulateur d'acidité à hauteur de 0,175 à 0,325 % en poids, un arôme à hauteur de 0,1 à 0,2 % en poids et un conservateur à hauteur de 0,075 à 0,125 % en poids.

3. Procédé de production d'une pâte de décoration et de nappage selon la revendication 1, et qui est **caractérisé en ce que** : on ajoute en tant qu'agent édulcorant, des composés individuels ou des combinaisons choisies dans le groupe comprenant le maltose, le sucre granulé, l'aspartame, l'acésulfame K, les sirops de fructose, la saccharine, le sorbitol, le mannitol, le maltitol, le lactitol et l'isomalt.

4. Procédé de production d'une pâte de décoration et de nappage selon la revendication 1, et qui est **caractérisé en ce que** : on ajoute en tant que régulateur d'acidité, des composés individuels ou des combinaisons choisies dans le groupe comprenant l'acide citrique (E 330), l'acide lactique (E 270), l'acide tartrique (E 334), l'acide malique (E 296), l'acide ascorbique (E 300), le trisodium et ses sels.

5. Procédé de production d'une pâte de décoration et de nappage selon la revendication 1, et qui est **caractérisé en ce que** : on ajoute en tant qu'épaississant, des composés individuels ou des combinaisons choisies dans le groupe comprenant l'amidon de maïs modifié (adipate de diamidon acétylé (E 1422)), la carboxyméthylcellulose (CMC), la gomme adragante, l'amidon de maïs prégélatinisé, la gomme de guar (E 412), la gomme xanthane (E 415), la gomme gellane (E 418), la pectine (E 440), l'alginate de sodium (E 401), le carraghénane (E 407), l'agar-agar (E 406), la gomme de caroube (E 410), l'alginate de calcium (E 404), l'amidon de pomme de terre modifié, l'amidon de maïs modifié, l'amidon de tapioca modifié, l'amidon de blé naturel, l'amidon de riz modifié.

6. Procédé de production d'une pâte de décoration et de nappage selon la revendication 1, et qui est **caractérisé en ce que** : on ajoute en tant qu'agent colorant, des composés individuels ou des combinaisons choisies dans le groupe comprenant la riboflavine, la chlorophylle, le caramel, le carbone à base de plantes, les carotènes, l'extrait de paprika, la bétanine, l'anthocyanine, le carbonate de calcium, le dioxyde de titane, l'oxyde ferrique et de l'hydroxyde, la curcumine, la tartrazine, le jaune de quinoléine, le jaune orangé, le carmin, la carmoisine, le Ponso 4R, le rouge allura AC, le bleu patenté, l'indigotine, le bleu brillant, le vert S, le noir PN, le brun HT, le lycopène et la lutéine.

7. Procédé de production d'une pâte de décoration et de nappage selon la revendication 1, et qui est **caractérisé en ce que** : on ajoute en tant qu'huile végétale, de l'huile de palme, de l'huile de coco, de l'huile de cacao et/ou de l'huile de tournesol.

8. Procédé de production d'une pâte de décoration et de nappage selon la revendication 1, et qui est **caractérisé en ce que** : on ajoute en tant qu'agent de développement d'arôme, du lait en poudre et/ou du petit-lait.

9. Procédé de production d'une pâte de décoration et de nappage selon la revendication 1, et qui est **caractérisé en ce que** : on ajoute en tant qu'arôme, des composés individuels ou des combinaisons choisies dans le groupe comprenant la poudre de vanilline, les arômes de chocolat (blanc, amer), les aromes d'amande, de riz au lait, de riz au lait et amande, de crème, de lait, de vanille liquide et de crème fraiche épaisse.

10. Procédé de production d'une pâte de décoration et de nappage selon la revendication 1, et qui est **caractérisé en ce que** : il comprend les étapes de préparation consistant à ajouter de l'amidon de maïs modifié, à hauteur de 37,5 à 42,5 % en poids, de l'amidon de maïs prégélatinisé, à hauteur de 0,65 à 0,75 % en poids, de la CMC, à hauteur de 0,25 à 0,35 % en poids, de la gomme adragante à hauteur de 0,25 à 0,35 % en poids, du sucre granulé à hauteur de 16,5 à 20,5 % en poids, du sirop de maltose à hauteur de 12,5 à 17,5 % en poids, de l'aspartame à hauteur de 0,02 à 0,03 % en poids, de l'acésulfame K à hauteur de 0,02 à 0,03 % en poids, de l'huile de palme à hauteur de 9 à 13 % en poids, de l'eau à hauteur de 7,5 à 12,5 % en poids, du lait en poudre à hauteur de 2,5 à 3,5 % en poids, de la glycérine à hauteur de 0,65 à 0,75 % en poids, du dioxyde de titane à hauteur de 0,6 à 0,7 % en poids, de l'acide lactique à hauteur de 0,1 à 0,2 % en poids, de l'acide citrique à hauteur de 0,075 à 0,125 % en poids, de la poudre de vanilline à hauteur de 0,1 à 0,2 % en poids et du sorbate de potassium à hauteur de 0,075 à 0,125 % en poids.

11. Procédé de production d'une pâte de décoration et de nappage selon la revendication 1, et qui est **caractérisé en ce que** : ledit mixeur est un chaudron à double paroi avec mixeur.

12. Pâte de décoration et de nappage, utilisée pour être directement façonnée pour le nappage des produits de pâtisserie, dans la préparation de décorations et d'une variété de figures décoratives, comprenant
- de la gomme adragante, de l'amidon de maïs modifié, de la carboxyméthylcellulose (CMC) et de l'amidon de maïs prégélatinisé en tant qu'épaississant,
- du maltose, du sucre granulé, de l'aspartame et de l'acésulfame K en tant qu'agent édulcorant,
- de l'huile de palme en tant qu'huile végétale,
- de l'eau de la ville raffinée en tant qu'eau,
- du lait en poudre en tant qu'agent aromatisant,
- de la glycérine en tant qu'humectant,
- du dioxyde de titane en tant qu'agent colorant,
- de l'acide lactique, de l'acide citrique en tant que régulateur d'acidité,
- de la poudre de vanilline en tant qu'arôme,
- du sorbate de potassium en tant que conservateur.

13. Pâte de décoration et de nappage selon la revendication 12, et qui est **caractérisée en ce que** : elle comprend les étapes de préparation consistant à ajouter de l'amidon de maïs modifié, à hauteur de 37,5 à 42,5 % en poids, de l'amidon de maïs prégélatinisé, à hauteur de 0,65 à 0,75 % en poids, de la CMC, à hauteur de 0,25 à 0,35 % en poids, de la gomme adragante à hauteur de 0,25 à 0,35 % en poids, du sucre granulé à hauteur de 16,5 à 20,5 % en poids, du sirop de maltose à hauteur de 12,5 à 17,5 % en poids, de l'aspartame à hauteur de 0,02 à 0,03 % en poids, de l'acésulfame K à hauteur de 0,02 à 0,03 % en poids, de l'huile de palme à hauteur de 9 à 13 % en poids, de l'eau à hauteur de 7,5 à 12,5 % en poids, de la poudre de lait à hauteur de 2,5 à 3,5 % en poids, de la glycérine à hauteur de 0,65 à 0,75 % en poids, du dioxyde de titane à hauteur de 0,6 à 0,7 % en poids, de l'acide lactique à hauteur de 0,1 à 0,2 % en poids, de l'acide citrique à hauteur de 0,075 à 0,125 % en poids, de la poudre de vanilline à hauteur de 0,1 à 0,2 % en poids et du sorbate de potassium à hauteur de 0,075 à 0,125 % en poids.
